# EUROPÄISCHE PATENTANMELDUNG

(11) **EP 2 241 434 A2**
(43) Veröffentlichungstag der Anmeldung: **20.10.2010**
(21) Anmeldenummer: 10003912.2
(22) Anmeldetag: 13.04.2010
(51) Int. Cl.: B30B 15/30, C10L 5/44

(54) **Verfahren und Anlage zur Herstellung von Pellets aus Biomasse in einer Pelletiermasse zur Verwendung als Brennmaterial in Feuerstellen**

(30) Priorität: 13.04.2009 DE 102009016469
(71) Anmelder: Dieffenbacher GmbH + Co. KG, 75031 Eppingen (DE)
(72) Erfinder: von Haas, Gernot, Dr., 69123 Heidelberg (DE)
(74) Vertreter: Hartdegen, Anton

(57) **Zusammenfassung**

Die Erfindung betrifft ein Verfahren und eine Anlage zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht und die Biomasse (1) nach der Aufbereitung mit einer Dosiervorrichtung (4) einer Pelletierpresse (2) zugeführt wird. Die Erfindung besteht darin, dass die Biomasse (1) direkt vor der Pelletierpresse (2) mit einer Auflösevorrichtung (5) vereinzelt wird. Insbesondere besteht die Erfindung darin, dass die Biomasse (1) in eine Dosiervorrichtung (4) eingeführt wird, die aus einer Streuvorrichtung (6) und einem in Fallrichtung darunter liegendem endlos umlaufenden Formband (7) besteht, wobei in der Dosiervorrichtung (4) eine Matte (8) mit einem im wesentlichen gleichmäßigen Flächengewicht auf dem Formband (7) gebildet wird, und die Dosiervorrichtung (4) die Matte (8) einer Auflösevorrichtung (5) vor einer Pelletierpresse (2) zuführt, wobei durch die Auflösevorrichtung (5) die Biomasse (1) vereinzelt wird.

## Beschreibung

Die Erfindung betrifft ein Verfahren zur Herstellung von Pellets aus aufbereiteter Biomasse in einer Pelletierpresse zur Verwendung als Brennmaterial in Feuerstellen nach dem Oberbegriff des Anspruches 1. Weiter betrifft die Erfindung eine Anlage zur Herstellung von Pellets aus aufbereiteter Biomasse in einer Pelletierpresse zur Verwendung als Brennmaterial in Feuerstellen nach dem Oberbegriff des Anspruches 11.

Die Herstellung von Pellets, auch Presslinge oder Granulat genannt, aus Feingut oder verdichtetem und/oder aufgeschmolzenem Material ist bereits lange bekannt. Brikettpressen haben zwischen zwei Walzen, wobei entweder eine oder beide als Matrize ausgearbeitete waren, Material verdichtet und zu Briketts zur Verfeuerung geformt. In der Kunststoffindustrie oder der Tierfutter verarbeitenden Industrie ist die Pelletierung mittels Extrudern und Lochscheiben, ggf. mit nachfolgenden Schneidvorrichtungen, ebenfalls hinreichend bekannt. Die Herstellung von Pellets aus vorzugsweise zerkleinerter Biomasse, wie Sägespäne, Staub oder dergleichen ist ebenfalls bereits hinreichend bekannt und wird im Bereich der erneuerbaren Energien als zukunftsweisende Technologie für den Klimaschutz, besonders in Europa, propagiert.

Es wird derzeit Biomasse nach einer Aufbereitung (Zerkleinerung, Siebung, Trocknung ...) in Biomassebunkern gelagert und anschließend mit Dosiervorrichtungen ausgetragen und einer Pelletierpresse zugeführt. Üblicherweise werden als Dosiervorrichtungen Schneckenförderer verwendet, die aber nicht dazu geeignet sind mehrere große Pelletierpressen gleichzeitig mit konstantem Materialfluss zu beschicken. Es muss also je Schneckenförderer zumindest eine Pelletierpresse, meist eine Kollerpresse mit Ringmatrize oder eine Doppelwalzenpresse, angeordnet sein. Alternativ kann in Kleinanlagen (Herstellung zum Eigen- oder Gemeinschaftsverbrauch) eine direkte Förderung zur Pelletierpresse vorgesehen sein, wobei in der Regel immer eine Dosiervorrichtung für die Pelletierpresse vorgesehen ist, aber beispielsweise von Hand nachgeschüttet wird.

Im Wesen der Schneckenförderer liegt es, die Biomasse, die bereits zu einem gewissen Grad durch das Eigengewicht während der Lagerung im Biomassenbunker verdichtet worden ist, noch zusätzlich während der Förderung zu verdichten und einer Pelletierpresse zuzuführen. Gerade aber Materialballungen erschweren eine konstante Zugabe zu den Pelletierpressen, da diese im Extremfall stückig aus der Förderung austreten. Sie können sogar zu Problemen im Einlauf von Pelletierpressen bzw. zur Minderung des maximalen Durchsatzes pro Stunde führen, wenn die Materialballungen nicht mehr oder nur schwer durch die Pelletierpressen verkleinert werden können und beispielsweise durch ihre Größe den Einlauf der Pelletierpresse blockieren und den Zustrom an Biomasse in den Pressspalt be- oder sogar verhindern. Gleichzeitig sorgt eine stückige Förderung für eine ungleichmäßige Beschickung der Pelletierpresse, was sich je nach Art der Pelletierpresse in erhöhtem Verschleiß oder Energieaufwand bemerkbar macht, wenn unregelmäßige Antriebs- bzw. Verdichtungskräfte mit Energie versorgt werden müssen oder Zuhaltevorrichtungen oder Lagerungen über Gebühr belastet werden.

Ein weiteres Problem stellt die Separierung der Biomasse im Biomassebunker bzw. während der Dosierung zur Pelletierpresse dar. Durch die Förderung ergibt sich das Problem, dass sich sogenannte Nester an einheitlichem Material, beispielsweise Staubnester neben Grobnestern an Biomasse bilden. Ein optimaler Pellet und dessen Herstellung zeichnet sich aber besonders dadurch aus, dass in einem Pellet gleiche Mengen an Fein- und Grobanteilen vorhanden sind, die sich gegenseitig binden.

Es ergibt sich weiter bei einer großindustriellen Produktionsplanung das Problem, dass bei einer Vergrößerung einer Doppelwalzenpresse oder einer Kollerpresse die zuführende Schneckenförderung um einen übertriebenen Faktor größer werden müsste, um eine ordentliche Beschickung zu ermöglichen, oder es müssen mehrere Schneckenförderungen parallel für eine große Pelletierpresse eingerichtet werden. Bei beiden Lösungen erhöht sich signifikant die Ausfallwahrscheinlichkeit und es entstehen hohe Beschaffungskosten für die Anlagentechnik, insbesondere auch für die Steuerung- und Regelungstechnik. Fällt nämlich nur eine Dosierförderung aus, muss die gesamte Anlage abgeschaltet werden, da ansonsten Teilbereiche der Pelletierpresse ohne Material arbeiten würde, was erhöhten Verschleiß bewirkt.

Die Aufgabe der Erfindung besteht in der Schaffung eines Verfahrens für eine optimierte und gleichmäßige Zuführung von Biomasse zu einer Pelletierpresse unter Vermeidung der oben genannten Nachteile. Weiter soll eine Anlage zur Durchführung des Verfahrens aber auch eine eigenständige Anlage geschaffen werden, die eine optimale, gleichmäßige und vorzugsweise unseparierte Beschickung von aufbereiteter Biomasse zu Pelletierpressen ermöglicht.

Im weiteren und besonderen Ausführungsfall soll die Aufgabe für das Verfahren und die Anlage darin bestehen eine kontinuierliche und über eine beliebig große Breite eine optimale, gleichmäßige und unseparierte Beschickung einer Pelletierpresse sicherzustellen.

Die Lösung der Aufgabe für ein Verfahren besteht darin, dass die Biomasse direkt vor der Pelletierpresse mit einer Auflösevorrichtung vereinzelt wird.

Die Lösung für einen weiteren und besonderen Ausführungsfall des Verfahrens besteht darin, dass die Biomasse in eine Dosiervorrichtung eingeführt wird, die aus einer Streuvorrichtung und einem in Fallrichtung darunter liegendem endlos umlaufenden Formband besteht, wobei in der Dosiervorrichtung eine Matte mit einem im wesentlichen gleichmäßigen Flächengewicht auf dem Formband gebildet wird, und die Dosiervorrichtung die Matte einer Auflösevorrichtung vor einer Pelletierpresse zuführt, wobei durch die Auflösevorrichtung die Biomasse vereinzelt wird.

Die Lösung der Aufgabe für eine Anlage zur Herstellung von Pellets besteht darin, dass zur Vereinzelung der Biomasse in Produktionsrichtung vor der Pelletierpresse eine Auflösevorrichtung angeordnet ist.

Die Lösung für einen weiteren und besonderen Ausführungsfall einer Anlage besteht darin, dass als Dosiervorrichtung und zur Bildung einer Matte mit einem im wesentlichen gleichmäßigen Flächengewicht eine Streuvorrichtung und ein in Fallrichtung darunter liegendes endlos umlaufenden Formband angeordnet ist, und dass zur Vereinzelung der Matte eine Auflösevorrichtung angeordnet ist.

Weitere vorteilhafte Maßnahmen und Ausgestaltungen des Gegenstandes der Erfindung gehen aus den Unteransprüchen und der folgenden Beschreibung mit der Zeichnung hervor.

Es zeigen:
- Figur 1: eine schematische Darstellung einer produzierenden Anlage zur Herstellung von Pellets nach der Aufbereitung der Biomasse und der Lagerung der Biomasse in einem Biomassebunker und dosierter Zuführung der Biomasse zu einer Pelletierpresse mit einer möglichen Ausführungsart einer Auflösevorrichtung,
- Figur 2: eine schematische Darstellung einer besonderen Ausführungsform der Dosiervorrichtung für die Pelletierpresse nach Figur 1,
- Figur 3: eine vergrößerte Darstellung einer Auflösevorrichtung bei einer Dosiervorrichtung nach Figur 1 oder 2,
- Figur 4: eine vergrößerte Darstellung einer weiteren Auflösevorrichtung nach einer Dosiervorrichtung nach Figur 2,
- Figur 5: eine vergrößerte Darstellung von Variationen der Auflösewalzen in Speichen- oder Stachelform und
- Figur 6: eine Variante der Pelletherstellung mit einer besonders bevorzugten Ausführungsform einer Pelletierpresse mit außen anliegenden Kollerwalzen an einer rotierenden Ringmatrize und einer optimalen Verteilung der Biomasse über die Länge und Breite der Pelletierpresse durch eine Dosiervorrichtung mit einer Streuvorrichtung und einem Formband und einer in Fallrichtung angeordneten Auflösevorrichtung.

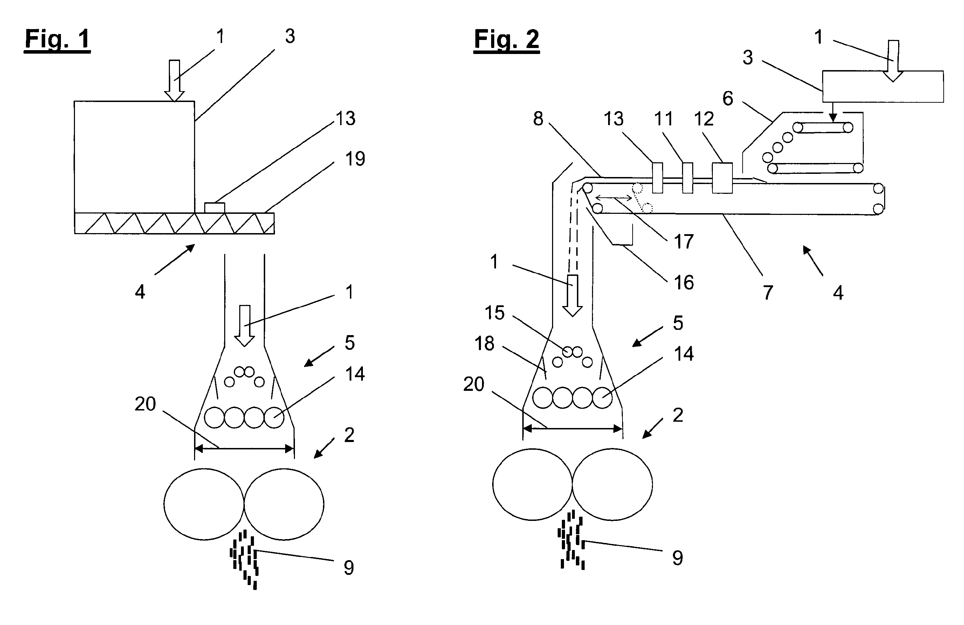

Der Ablauf der Herstellung stellt sich nach den Figuren 1 und 2 wie folgt dar. Nach Figur 1 wird aus einem Biomassebunker 3 die Biomasse 1 ausgetragen.

Dies kann mit einer Zwischenförderung geschehen oder direkt mit der Dosiervorrichtung 4, die nach Figur 1 als eine Dosierschnecke 19 ausgebildet ist. Die Biomasse 1 kann in der Dosierschnecke 19 nach Bedarf mit Dampf durch eine Bedampfungseinrichtung 13 behandelt werden oder ggf. auch in einer Zwischenstation auf fehlerhafte Stellen, definiert durch für eine Pelletierpresse 2 gefährliche Fremdkörper, untersucht werden. Im Austragsbereich fällt die Biomasse 1 aus der Dosierschnecke 19 heraus und wird nun mittels einer Auflösevorrichtung 5 vereinzelt. Diese Auflockerung kann mit einer oder mehreren Walzen geschehen, wobei in diesem Bespiel in weitere Fallrichtung nach der Vereinzelung durch die Auflösevorrichtung 5 die Pelletierpresse 2 angeordnet ist, in diesem Beispiel als eine Zweiwalzenpelletierpresse, die aus der Biomasse 1 die Pellets 9 formt.

Nach Figur 2 besteht die Dosiervorrichtung 4 nicht aus einer Dosierschnecke 19, sondern aus einer Streuvorrichtung 6, die die Biomasse 1 mit einem möglichst gleichmäßigen Flächengewicht auf einem Formband 7 ablegt bzw. abstreut. In einer Streuvorrichtung wird die Biomasse mittels verschiedener Verfahren auf ein Formband aufgelegt, wobei die Anwendung von Streuwalzen bevorzugt wird. Bereits hier erfolgt eine optimale Auflösung und eine lockere Ablage der Biomasse 1 auf einem Zwischenförderer, dem Formband 7. In einem Ausführungsbeispiel versteht die Lehre der Erfindung bereits die Streuvorrichtung 6 als eine Kombination aus Dosier- und Auflösevorrichtung im Sinne eines Ausführungsbeispieles. In vorteilhafter Weise liegt nun die Biomasse 1 in einer gleichmäßigen Matte 8 vor und kann, je nach Formbandbreite und damit über eine beliebige Breite einer beispielsweisen übergroßen Pelletierpresse 2 mit einem gleichmäßigen Flächengewicht zugeführt werden. Vorzugsweise ist eine Steuer- oder Regelungsvorrichtung (nicht dargestellt) vorgesehen, die für einen optimalen Eintrag der Biomasse 1 auf dem Formband 7 in die Pelletierpresse 2 in Abhängigkeit vom möglichen Herstellungsvolumen bzw. der Umdrehungszahl der Walzenpresse oder einer Kollerpresse sorgt. Auch hier kann eine Bedampfungseinrichtung 13 vorgesehen sein, die vorzugsweise das Formband 7 und die Matte 8 durchströmt, wobei in diesem Fall das Formband 7 als ein Siebband ausgeführt ist.

In vorteilhafter Weise kann die Matte 8 auf dem Formband mittels einer Untersuchungsvorrichtung 11, bevorzugt eine Durchstrahlungsvorrichtung zur Ermittlung des Flächengewichts der Matte 8, untersucht werden, um Unregelmäßigkeiten in der Biomasse 1 zu ermitteln. Beispielsweise können mit einer derartigen Durchstrahlungsvorrichtung Flächengewichtsunterschiede durch Sandkörner detektiert werden, da ein hohes Auflöseraster möglich ist und der Flächengewichtsunterschied eines Sandkorns, das bei der Aufbereitung durch eine Siebung oder Schwerkraftabscheidung nicht entfernt worden ist, detektierbar ist. Eine Durchstrahlungsvorrichtung besteht im Allgemeinen aus einem Sender und einem Empfänger mit Auswerteeinheit, die die Informationen an eine Steuer- oder Regelvorrichtung weiterleitet, die für eine Aussortierung der Fremdkörper entsprechende Vorrichtungen schaltet. Im Falle einer fehlerhaften Stelle der Matte 8, wird diese in einen Abwurfschacht 16 entsorgt, indem das Formband 7 durch einen Formbandrückzug 17 den Abwurfbereich der Matte 8 verändert. Die abgeworfene Matte 8 wird nach einer Auflösevorrichtung 5 zugeführt bevor die Biomasse 1 in die Pelletierpresse 2 eintritt und zu Pellets 9 verpresst wird.

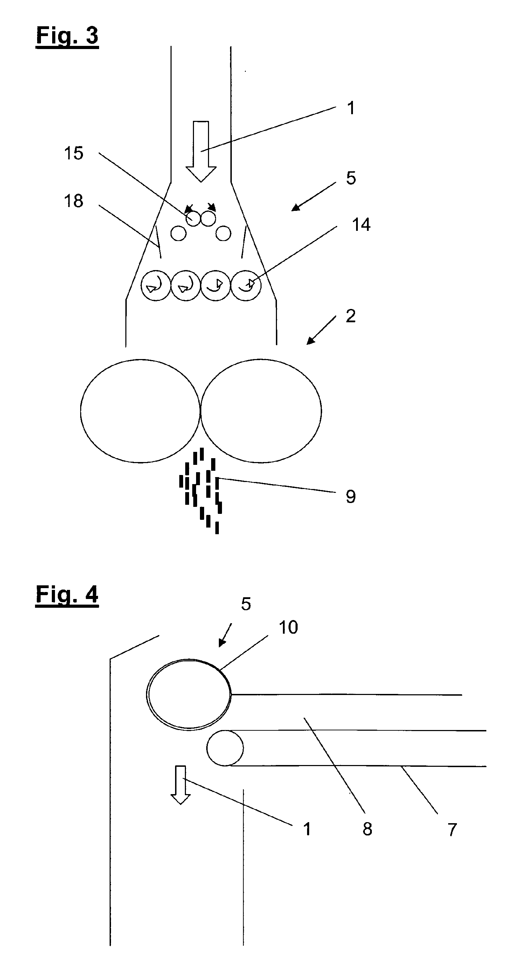

In Figur 3 ist eine vergrößerte Darstellung der Auflösevorrichtung 5 dargestellt, die zumindest aus einer Speichenwalze 14, hier aus vier Speichenwalzen 14 besteht. Für eine Verbesserung der Auflösung kann in Fallrichtung vor den Speichenwalzen 14 noch zumindest eine Vortragswalze 15 vorgesehen sein, in diesem bevorzugten Ausführungsbeispiel sind es vier Vortragswalzen 15, die gestuft für eine Vorseparierung sorgen. Die Drehrichtung der Speichenwalzen ist beispielhaft eingezeichnet. In der Auflösevorrichtung können Leitklappen 18 angeordnet sein. Diese werden vorzugsweise mittels Stellvorrichtungen in ihrem Winkel zur Wandung und/oder zu den Walzen eingestellt. Dies geschieht vorzugsweise um den Strom an fallender Biomasse 1 zu leiten bzw. den Auftreffwinkel der Biomasse 1 an den Vortragswalzen 15 und/oder den Auflösewalzen einzustellen.

Figur 4 zeigt eine vergrößerte Darstellung einer anderen Ausführungsform der Auflösevorrichtung 5, die an einem Formband 7 nach Figur 2 angeordnet ist. Dabei rotiert eine Fräswalze 10 mit angemessener Geschwindigkeit in der Zeichnung im Uhrzeigersinn und vereinzelt direkt am Ende der Dosiervorrichtung 4 die Matte 8. Vorzugsweise kann eine derartige Fräswalze 10 auch im Austragsbereich einer Dosierschnecke 19 angeordnet sein und für eine Vereinzelung der Biomasse 1 während des Austritts aus der Dosierschnecke 19 sorgen. In allen Ausführungsbeispielen wird durch die Auflösevorrichtung 5 die Biomasse 1 über eine vorgegebene Fläche verteilt und anschließend der Pelletierpresse 2 gleichmäßig zugeführt. Vorzugsweise wird nur Biomasse 1 verwendet, die während der Aufbereitung auf eine Größe über 0,3 mm Siebmaschenweite gesichtet wird.

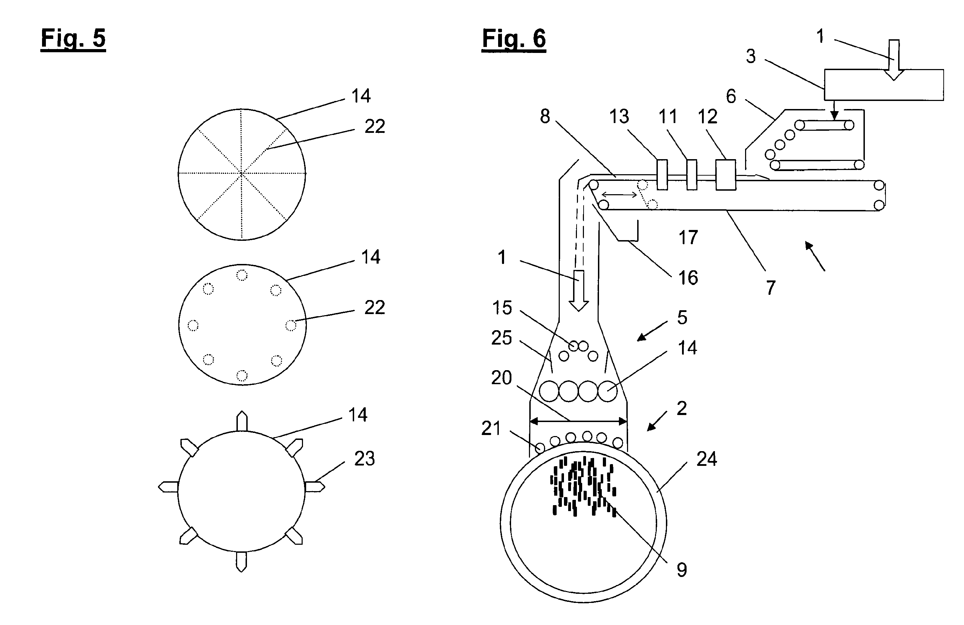

In Figur 5 sind in einer vergrößerten Seitenansicht mögliche Variationen von Speichenwalzen 14 angeordnet, die in der oberen Teilzeichnung geradlinige Speichen 22 aufweisen, die aber auch schaufelförmig und/oder gebogen sein können. In der mittigen Darstellung sind die Speichen 22 als Verbindungen zwischen den außen liegenden Scheiben der Speichenwalze 14 dargestellt, wobei die Verbindungen in einem Radius angeordnet sind und vorzugsweise aus Verbindungsrohren oder -stangen bestehen. In der unteren Teilzeichnung ist die Auflösewalze respektive die Speichenwalze 14 mit Stacheln 23 versehen. In einer zweistufigen Ausführungsform, insbesondere nach Figur 3, sind Vortragswalzen 15 in Fallrichtung der Biomasse 1 vor den Auflösewalzen, bzw. den Speichenwalzen 14 angeordnet. Im Rahmen der Erfindung ist es natürlich möglich auch andere Auflösungsverfahren- oder Vorrichtungen zu verwenden, um das Ziel einer ordentlichen Auflösung und/oder Verteilung der Biomasse 1 vor oder über einer Pelletierpresse 2 zu erreichen.

In Figur 6 ist beispielhaft noch eine andere Variante einer Pelletierpresse 2 eingezeichnet, die aus einer rotierenden Ringmatrize 24 und an dieser anliegenden Kollerwalzen 21 besteht. In der besonders bevorzugten Ausführungsform wird nun eine über eine vorzugsweise gleiche Länge der Ringmatrize 24 respektive der Kollerwalzen 21 eine Matte 8 auf dem Formband 7 gestreut und oberhalb der Pelletierpresse 2 abgeworfen. Die während des Abwurfes bzw. des Fallens aufbrechende Matte 8 wird anschließend durch zumindest eine Auflösewalze, im vorliegenden Beispiel durch vier Speichenwalzen 14 aufgelöst und über die Verteilstrecke 20 gleichmäßig verteilt. Bei besonders hohen Durchsätzen oder anderen Anwendungsfällen, kann es notwendig sein, die Auflösevorrichtung 5 zweistufig auszuführen. Beispielsweise kann die Matte 8 auf dem Formband 7 für eine Optimierung nachfolgender Behandlungen mit einer Vorpresse 12 verdichtet werden, beispielsweise für eine Bedampfungseinrichtung 13 oder eine optimierte Untersuchungsvorrichtung 11. Hierzu sind in Fallrichtung der Biomasse 1 vor den Auflösewalzen noch Vortragswalzen 15 vorgesehen, die an den Anwendungsfalle angepasst werden oder ähnliche Aufbaugeometrien aufweisen wie die Speichenwalzen 14 nach Figur 5. In der Auflösevorrichtung 5 können als Alternative zu den Leitklappen 18 auch Rechen 25 angeordnet sein.

Da durch die hergestellte gleichmäßige und vorzugsweise im Flächengewicht optimierte Matte in Längserstreckung der Pelletierpresse 2 bereits eine Verteilung stattgefunden hat, wird nun annähernd über den Durchmesser, bzw. über die Verteilstrecke 20, die Matte verteilt und gleichzeitig homogen aufgelöst, so dass keine störenden Separierungen von Fein- und Grobgut oder Zusammenballungen in den Pressbereich der Pelletierpresse 2 gelangen.

Es wird deutlich, dass die Auflösevorrichtung 5 die gestreute Matte 8 nach den Figuren 2 und 6 unabhängig des Vorschubes des Formbandes 7, der Höhe der Matte 8 oder auch der Dichte der Matte 8 auflösen kann. Dies gilt besonders, wenn die Biomasse 1 zuvor durch eine Bedampfung und/oder eine Wasserbesprühung eine Neigung zur Verklebung aufweist.

Die Auflösevorrichtung 5 löst im weiteren Sinne die Biomasse 5 nicht nur auf, sondern kann diese auch in einem vorgegebenem Bereich oder einer speziellen Art und Weise der Pelletierpresse zuführen, insbesondere dafür, dass Verstopfungen und/oder ein Leerlauf vermieden wird.

### Bezugszeichenliste: DP1374EP

- 1.: Biomasse
- 2.: Pelletierpresse
- 3.: Biomassebunker
- 4.: Dosiervorrichtung
- 5.: Auflösevorrichtung
- 6.: Streuvorrichtung
- 7.: Formband
- 8.: Matte
- 9.: Pellets
- 10.: Fräswalze
- 11.: Untersuchungsvorrichtung
- 12.: Vorpresse
- 13.: Bedampfungseinrichtung
- 14.: Speichenwalze
- 15.: Vortragswalzen
- 16.: Abwurfschacht
- 17.: Formbandrückzug
- 18.: Leitklappen
- 19.: Dosierschnecke
- 20.: Verteilstrecke
- 21.: Kollerwalzen
- 22.: Speichen
- 23.: Stachel
- 24.: Ringmatrize
- 25.: Rechen

## Patentansprüche

1. Verfahren zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht und die Biomasse (1) nach der Aufbereitung mit einer Dosiervorrichtung (4) einer Pelletierpresse (2) zugeführt wird, **dadurch gekennzeichnet, dass** die Biomasse (1) vor der Pelletierpresse (2) mit einer Auflösevorrichtung (5) vereinzelt wird.

2. Verfahren zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht und die Biomasse (1) nach der Aufbereitung mit einer Dosiervorrichtung (4) einer Pelletierpresse (2) zugeführt wird, insbesondere nach Anspruch 1, **dadurch gekennzeichnet, dass** die Biomasse (1) in eine Dosiervorrichtung (4) eingeführt wird, die aus einer Streuvorrichtung (6) und einem in Fallrichtung darunter liegendem endlos umlaufenden Formband (7) besteht, wobei in der Dosiervorrichtung (4) eine Matte (8) mit einem im wesentlichen gleichmäßigen Flächengewicht auf dem Formband (7) gebildet wird, und die Dosiervorrichtung (4) die Matte (8) einer Auflösevorrichtung (5) vor einer Pelletierpresse (2) zuführt, wobei durch die Auflösevorrichtung (5) die Biomasse (1) vereinzelt wird.

3. Verfahren nach den Ansprüchen 1 oder 2, **dadurch gekennzeichnet, dass** durch die Auflösevorrichtung (5) die Biomasse (1) über eine vorgegebene Fläche der Pelletierpresse (2) verteilt wird.

4. Verfahren nach einem oder mehreren der vorhergehenden Ansprüche,
**dadurch gekennzeichnet, dass** die Auflösevorrichtung (5) zumindest eine Speichenwalze (14) verwendet.

5. Verfahren nach einem oder mehreren der vorhergehenden Ansprüche,
**dadurch gekennzeichnet, dass** die Auflösevorrichtung (5) die Biomasse (1) bei Austritt aus der Dosiervorrichtung (4) mit einer Fräswalze (10) vereinzelt.

6. Verfahren nach einem oder mehreren der vorhergehenden Ansprüche,
**dadurch gekennzeichnet, dass** die Biomasse (1) mittels einer Untersuchungsvorrichtung (11), insbesondere mit einer Durchstrahlungsvorrichtung, auf fehlerbehaftete Stellen geprüft, und bei Erkennung derartiger Stellen die Matte (8) abschnittsweise in einen Abwurfschacht (16) überführt wird.

7. Verfahren nach einem oder mehreren der vorhergehenden Ansprüche,
**dadurch gekennzeichnet, dass** Biomasse (1) verwendet wird, die während der Aufbereitung auf eine Größe über 0,3 mm (Siebmaschenweite) gesichtet wird.

8. Verfahren nach einem oder mehreren der vorhergehenden Ansprüche,
**dadurch gekennzeichnet, dass** die Biomasse (1) in der Dosiervorrichtung (4) mit Dampf in einer Bedampfungseinrichtung (13) durchströmt wird.

9. Verfahren nach einem oder mehreren der vorhergehenden Ansprüche,
**dadurch gekennzeichnet, dass** die Matte (8) in der Dosiervorrichtung (4) verdichtet wird.

10. Verfahren nach einem oder mehreren der vorhergehenden Ansprüche,
**dadurch gekennzeichnet, dass** als Pelletierpresse (2) eine Extruderpresse, eine Zweiwalzenpresse oder eine Ringmatrize mit zumindest einer innen oder außen angeordneten Kollerwalze verwendet wird.

11. Anlage zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht und eine Dosiervorrichtung (4) für die Pelletierpresse (2) angeordnet ist,
**dadurch gekennzeichnet, dass**
zur Vereinzelung der Biomasse (1) in Produktionsrichtung vor der Pelletierpresse (2) eine Auflösevorrichtung (5) angeordnet ist.

12. Anlage zur Herstellung von Pellets (9) aus aufbereiteter Biomasse (1) in einer Pelletierpresse (2) zur Verwendung als Brennmaterial in Feuerstellen, wobei die Biomasse (1) aus zellulose- und/oder lignozellulosehaltigen Fasern, Spänen, oder Schnitzel, mit oder ohne einem Bindemittel und/oder Zuschlagstoffen besteht, wobei zur Lagerung der Biomasse (1) nach der Aufbereitung ein
Biomassebunker (3) und zum Austrag der Biomasse (1) aus dem Biomassebunker (3) eine Dosiervorrichtung (4) für die Pelletierpresse (2) angeordnet ist, insbesondere nach Anspruch 11, **dadurch gekennzeichnet, dass** als Dosiervorrichtung (4) und zur Bildung einer Matte (8) mit einem im wesentlichen gleichmäßigen Flächengewicht eine Streuvorrichtung (6) und ein in Fallrichtung darunter liegendes endlos umlaufenden Formband (7) angeordnet ist, und dass zur Vereinzelung der Biomasse (1) eine Auflösevorrichtung (5) angeordnet ist.

13. Anlage nach den Ansprüchen 11 oder 12, **dadurch**
**gekennzeichnet, dass** als Auflösevorrichtung (5) zumindest eine Speichenwalze (14) in Fallrichtung der Biomasse (1) nach Austritt aus der Dosiervorrichtung (4) angeordnet ist.

14. Anlage nach einem oder mehreren der Ansprüche 11 bis 13,
**dadurch gekennzeichnet, dass** zur Vereinze!ung der Biomasse (1) am Austritt der Dosiervorrichtung (4) als Auflösevorrichtung (5) eine Fräswalze (10) angeordnet ist.

15. Anlage nach einem oder mehreren der Ansprüche 11 bis 14,
**dadurch gekennzeichnet, dass** zur Prüfung der Biomasse (1) in der Dosiervorrichtung (4) eine Untersuchungsvorrichtung (11), insbesondere eine Durchstrahlungsvorrichtung, angeordnet ist.

16. Anlage nach einem oder mehreren der Ansprüche 11 bis 15,
**dadurch gekennzeichnet, dass** zur Durchströmung der Biomasse (1) mit Dampf in der Dosiervorrichtung (4) eine Bedampfungseinrichtung (13) angeordnet ist.

17. Anlage nach einem oder mehreren der Ansprüche 11 bis 16,
**dadurch gekennzeichnet, dass** zur Verdichtung der Biomasse (1) in der Dosiervorrichtung (4) eine Dosierschnecke (19) oder eine Vorpresse (12) angeordnet ist.

18. Anlage nach einem oder mehreren der Ansprüche 11 bis 17,
**dadurch gekennzeichnet, dass** als Pelletierpresse (2) eine Extruderpresse, eine Zweiwalzenpresse oder eine Ringmatrize mit zumindest einer innen oder außen angeordneten Kollerwalze angeordnet ist.
